# EUROPEAN PATENT APPLICATION

(11) **EP 4 513 599 A1**
(43) Date of publication of application: **26.02.2025**
(21) Application number: 23791250.6
(22) Date of filing: 19.04.2023
(51) Int. Cl.: H01M 4/64, H01M 4/66

(54) **COMPOSITE CURRENT COLLECTOR HAVING METAL THREE-DIMENSIONAL NETWORK STRUCTURE, PREPARATION METHOD FOR COMPOSITE CURRENT COLLECTOR, AND ELECTRODE PLATE AND BATTERY**

(30) Priority: 20.04.2022 CN 202210414366; 27.05.2022 WO PCT/CN2022/095421
(71) Applicant: JIANGYIN NANOPORE INNOVATIVE MATERIALS TECHNOLOGY LTD, Jiangyin City Wuxi, Jiangsu 214445 (CN)
(72) Inventor: WANG, Chenghao, Wuxi, Jiangsu 214445 (CN); LI, Xuefa, Wuxi, Jiangsu 214445 (CN); ZHANG, Guoping, Wuxi, Jiangsu 214445 (CN)
(74) Representative: Finnegan Europe LLP
(86) International application number: PCT/CN2023/089095
(87) International publication number: WO 2023/202595

(57) **Abstract**

The present disclosure provides a composite collector having a metal three-dimensional network structure, a preparation method for the composite collector, an electrode plate and a battery. The composite current collector includes a substrate layer and two metal layers respectively arranged on two sides of the substrate layer. The substrate layer is composed of a polymer backbone and a filling region. The polymer backbone has interconnecting channels, and the channels are filled with a metal material filler, thereby forming a continuous metal three-dimensional network structure. Such structure not only provides a plurality of current channels provided for electrons, achieving a smaller sheet resistance and a relatively strong conductivity of the composite current collector, but also allows the metal three-dimensional network structure to be in contact with the metal layers on two sides and thereby forms a unit.

## Description

### TECHNICAL FIELD

The present application relates to the technical field of new materials and, particularly, to a composite current collector having a metal three-dimensional network structure, a preparation method for the composite current collector, an electrode plate and a battery.

### BACKGROUND

Non-aqueous rechargeable batteries, such as lithium-ion batteries, are a class of batteries widely used in the majority of electronic products today, which generally adopt metal foils as current collectors to collect electrons for current conduction. However, the metal foils tend to be heavy, resulting in a low energy density of the final battery product, which is unfavorable for applications. In order to solve the problems of high weight and low energy density of the conventional current collectors, a "sandwich" type composite current collector has been prepared by introducing a low-density polymer film material into the current collector. That is, the polymer film material is in the middle, and metal films are coated on both sides of the polymer film material, respectively. This type of composite current collectors improve the energy density to a certain extent compared with the conventional current collectors. However, due to the combination of different film layers made of different materials, there remain some defects, such as easy separation between film layers, insufficient flexibility and strength, relatively few current channels and relatively large sheet resistance.

### SUMMARY

Based on this, it is necessary to provide a composite current collector having a metal three-dimensional network structure, which has relatively high structural stability, difficult separation between film layers, better flexibility and strength, more current channels and smaller sheet resistance, and a method for preparing the composite current collector.

In an aspect of the present application, provided herein is a composite current collector having a three-dimensional network structure, including a substrate layer and two metal layers respectively arranged on two sides of the substrate layer. The substrate layer is composed of a polymer backbone and a filling region. The filling region includes a plurality of interconnecting channels and a metal filler filled in the plurality of interconnecting channels. The metal filler partly or completely fills the interconnecting channels to form a continuous metal three-dimensional network structure. The metal three-dimensional network structure is in contact with the two metal layers. An average diameter of cross sections of the interconnecting channels is in a range of 200 nm to 500 nm.

In some embodiments, the interconnecting channels constitute 30% to 60% volume of the substrate layer.

In some embodiments, the metal filler constitutes 30% to 60% volume of the substrate layer .

In some embodiments, the metal filler partly fills the interconnecting channels to form a continuous metal three-dimensional network structure.

In some embodiments, the metal filler constitutes 80% to 95% volume of the substrate layer, forming the continuous metal three-dimensional network structure.

In some embodiments, the metal filler completely fills the interconnecting channels to form a continuous metal three-dimensional network structure.

In some embodiments, the polymer backbone is selected from a polyethylene terephthalate nonwoven fabric, a polyimide nonwoven fabric, and a polypropylene nonwoven fabric.

In some embodiments, the polymer backbone is selected from a polyethylene terephthalate porous film, a polyimide porous film, and a polypropylene porous film.

In some embodiments, a puncture strength of the polymer backbone is greater than or equal to 100 gf.

In some embodiments, a transverse tensile strength of the polymer backbone is greater than or equal to 150 Mpa, and/or a longitudinal tensile strength of the polymer backbone is greater than or equal to 150 Mpa.

In some embodiments, a transverse elongation of the polymer backbone is greater than or equal to 20%, and/or a longitudinal elongation of the polymer backbone is greater than or equal to 20%.

In some embodiments, metal materials in the two metal layers and in the metal three-dimensional network structure are each independently selected from copper and aluminum.

In some embodiments, the metal materials in the two metal layers and in the metal three-dimensional network structure are copper.

In some embodiments, the metal materials in the two metal layers and in the metal three-dimensional network structure are aluminum.

In some embodiments, a thickness of the composite current collector is in a range of 3 µm to 30 µm, and preferably 5 µm to 20 µm.

In some embodiments, a thickness of the substrate layer is in a range of 1 µm to 25 µm, and preferably 3 µm to 15 µm.

In some embodiments, thicknesses of the two metal layers are each independently in a range of 0.3 µm to 3 µm.

In another aspect of the present application, further provided herein is a preparation method of the composite current collector disclosed herein, including the following steps:
Providing a polymer backbone having a plurality of interconnecting channels, filling metal filler into the interconnecting channels of the polymer backbone by a vacuum coating method thereby preparing a substrate layer, and then providing two metal layers on the two sides of the substrate layer.

The vacuum coating method is vacuum evaporation or magnetron sputtering.

In some embodiments, the vacuum coating method is the vacuum evaporation, and the process parameters of the vacuum evaporation include one or more of the following parameters: vacuum degree < 10⁻² Pa, evaporation temperature in a range of 600 °C to 1600° C, and evaporation rate in a range of 10 m/min to 100 m/min.

In some embodiments, the preparation method further comprises a step of winding the formed composite current collector, and the winding tension is in a range of 5 N to 25 N.

In another aspect of the present application, provided herein is an electrode plate, including the composite current collector in any one of the aforementioned embodiments.

Provided in the present application is a battery including the aforementioned electrode plate.

In the present application, by filling the metal material into the interconnecting channels of the polymer backbone, wherein the average diameter of the cross sections of the interconnecting channels is in the range of 200 nm to 500 nm, a continuous metal three-dimensional network structure is thus formed and uniformly distributed in the substrate layer. Such structure not only provides a plurality of current channels provided for electrons, achieving a smaller sheet resistance and a relatively strong conductivity of the composite current collector, but also allows the metal three-dimensional network structure to be in contact with the metal layers on two sides and thereby forms a unit, which avoids the defect of easy separation between the film layers made of different materials in the conventional composite current collector. Moreover, the metal material is uniformly interspersed in the substrate layer, so that the achieved composite current collector can better combine the strength of the metal material and the toughness of the polymer material. By adopting the vacuum coating method, especially the vacuum evaporation method, the metal material filler can be uniformly filled into the interconnecting channels of the substrate layers, and the preparation method is simple and easy for industrial production.

By adopting the aforementioned composite current collector having the three-dimensional network structure as the material of the electrode plate, the underlying problem of poor flexibility of the metal current collector or the conventional composite current collector is therefore solved, and thereby effectively prevents the plate from a fracture problem in the rolling process.

By adopting the aforementioned electrode plate to prepare the battery, the finished product is flexible, has sufficient strength to pass the battery extrusion safety test and the heavy impact test for the battery successfully, and has good conductivity and small sheet resistance, which provides a broad application prospect.

### DETAILED DESCRIPTION

In order to facilitate an understanding of the present application, the application will be described in more details below with reference to relevant embodiments. However, the present application may be implemented in many different forms and is not limited to the embodiments described herein. In fact, these embodiments are provided to enable a more thorough and comprehensive understanding of the disclosure of the present application.

Furthermore, the related terms "first", and "second" are used for descriptive purposes only and are not to be understood as indicating or implying relative importance or implicitly specifying the number of technical features indicated. Thus, a feature defined with the terms "first", "second" may expressly or implicitly include at least one such feature. In the description of the application, "a plurality of" means at least two, such as two and three, unless otherwise specifically defined. In the description of the application, "several" means at least one, such as one, two, unless otherwise specifically defined.

Unless otherwise defined, all terms including technical and scientific terms used herein have the same meaning as commonly understood by those skilled in the art to which the present application belongs. The terms used herein in the specification of the present application are used only to describe specific embodiments and are not intended as a limitation of the application. The term "and/or" as used herein includes any and all combinations of one or more of the relevant listed items.

In the present application, the technical features described as open include a closed technical solution consisting of enumerated features, and also include an open technical solution comprising enumerated features.

A numerical range involved in the present application, unless otherwise specified, is regarded as continuous in the numerical range, and includes a minimum value and a maximum value of the range, and each value between the minimum value and the maximum value. Further, when the range is an integer range, each integer between the minimum value and the maximum value of the range is included. In addition, when a plurality of ranges are provided to describe a characteristic or feature, the ranges may be combined. In other words, unless otherwise specified, all scopes disclosed herein shall be understood to include any and all sub-scopes subsumed therein.

The percentage content involved in the present application, unless otherwise specified, refers to the mass percentage for solid-liquid mixture and solid-solid mixture, or the volume percentage for liquid-liquid mixture.

The percentage involved in the present application, unless otherwise specified, refers to the final concentration. The final concentration refers to the percentage of an added component in a system to which the component has been added.

A temperature parameter in the present application, unless otherwise defined, is allowed to be subjected to not only a constant temperature treatment, but also a treatment within a certain temperature range. The constant temperature treatment allows the temperature to fluctuate within the accuracy of the instrument control.

An average diameter of the cross sections of the channels in the present application, unless otherwise defined, is the average of the equivalent circular diameters of the channel cross sections.

In an aspect of the present application, provided herein is a composite current collector having a metal three-dimensional network structure, which includes a substrate layer and two metal layers respectively arranged on two sides of the substrate layer. The substrate layer is composed of a polymer backbone and a filling region, the filling region includes a plurality of interconnecting channels in communication with each other and a metal filler, the metal filler fills the plurality of the interconnecting channels and forms a continuous metal three-dimensional network structure, and the metal three-dimensional network structure is in contact with the two metal layers.

The average diameter of the cross sections of the interconnecting channels is in a range of 200 nm to 500 nm.

Conventional current collectors adopting a pure metal as a raw material may account for up to 15% by weight, or even more, of the entire lithium battery. However, the current collector has a simple function, serves mainly as a carrier for conduction of electrons, and is the only component that does not affect the transport of lithium ions in the entire battery. Therefore, there remains great potential to develop and optimize the current collectors, and hence the energy density of the lithium battery will be greatly improved if the weight proportion of the current collector is reduced as much as possible. In this regard, the researchers first tried to make the current collector as thin as possible. However, if the metal current collector is too thin, there might cause problems in mechanical strength and high processing costs. Moreover, since the electrode material needs to be coated in the current collector by processes such as rolling, the current collector should have a high degree of flexibility, otherwise it is easy broken during processing. Further, a research team proposed an idea of using a polymer material, such as a polyimide, as an intermediate substrate layer and then coating two sides of the substrate layer with a metal layer, so as to change the original current collector into a "sandwich" type composite current collector. Since a density of the polymer is much lower than that of the metal, the composite current collector prepared in this way becomes 80% lighter than the original pure metal current collector without increasing the overall thickness (about 9 microns). Due to the reduction in the weight proportion of the current collector, the energy density of the battery is able to be increased by 8% to 26% (which varies depending on the type of battery). This kind of composite current collector can improve the energy density to a certain extent compared with the conventional current collector. However, due to the combination of different film layers made of different materials, there are still some defects, such as easy separation between film layers, insufficient flexibility and strength, relatively few current channels and relatively large sheet resistance.

Based on the aforementioned background, those skilled in the art of present disclosure have found through numerous studies that a continuous metal three-dimensional network structure can be formed, and the metal material filler is uniformly distributed in the substrate layer by filling the metal material filler into the channels of the polymer backbone, which has the interconnecting channels with the average diameter of the cross sections in the range of 200 nm to 500 nm. Such structure not only provides a plurality of current channels provided for electrons, achieving a smaller sheet resistance and a relatively strong conductivity of the composite current collector, but also allows the metal three-dimensional network structure to be in contact with the metal layers on two sides and thereby forms a unit, which avoids the defect of easy separation between the film layers made of different materials in the conventional composite current collector. Moreover, the metal material filler is uniformly interspersed in the substrate layer, so that the achieved composite current collector can better combine the strength of the metal material and the toughness of the polymer material.

In some embodiments, the average diameter of the cross sections of the interconnecting channels may be, for example, 220 nm, 240 nm, 260 nm, 280 nm, 300 nm, 320 nm, 340 nm, 360 nm, 380 nm, 400 nm, 420 nm, 440 nm, 460 nm, or 280 nm, and preferably in a range of 250 nm to 350 nm. Controlling the diameters of the cross sections of the channels within a certain range allows the composite current collector to have good conductivity, relatively small sheet resistance, and sufficient strength and flexibility. The diameters of the cross sections of the channels being too small is unfavorable to the infiltration of the metal material to form a complete and interconnected three-dimensional network structure. Even if the channels are filled with metal, the current channels may be too narrow, which reduces the conductivity of the current collector, and it is easily to cause some of the channels to be not filled properly, resulting in a too large sheet resistance. The diameters being too large leads to the rigidity of the metal three-dimensional network structure being too strong, which affects the flexibility of the composite current collector.

It is to be understood that the point value should be understood as the average of the diameters of the cross sections of all channels due to errors in the preparation process when the diameters of the cross sections of the interconnecting channels of a certain polymer backbone are limited to a specific point value. The average value may be measured by arbitrarily selecting a number of measurement points at different locations in the polymer backbone, measuring the diameters at the measurement points, and then averaging all the measured values.

In some embodiments, the interconnecting channels constitute 30% to 60%, preferably 38% to 52%, volume of the substrate layer. The volume percentage of the interconnecting channels in the substrate layer may be, for example, 35%, 40%, 45%, 50%, or 55%. The volume percentage of the interconnecting channels in the substrate layer balances the ratio of the metal material to the polymer, allowing the composite current collector to combine the strength of the metal material with the toughness of the polymer material, providing a higher degree of safety and performance.

In some embodiments, the metal filler constitutes 30% to 60%, preferably 38% to 52%, volume of the substrate layer, and. The volume percentage of the metal filler in the substrate layer may be, for example, 35%, 40%, 45%, 50%, or 55%. The volume percentage of the metal filler in the substrate layer balances the ratio of the metal material to the polymer, allowing composite current collector to combine the strength of the metal material with the toughness of the polymer material, providing a higher degree of safety and performance.

It is to be understood that the volume percentage of the metal filler in the substrate layer should be less than or equal to the volume percentage of the channels in the substrate layer, and it means that the channels are completely filled with the metal filler when the two are equal. it means that the channels are incompletely filled with the metal filler when the two are not equal (when the volume percentage of the metal filler is less than the volume percentage of the channels).

In some embodiments, the polymer backbone is selected from a polyethylene terephthalate nonwoven fabric, a polyimide nonwoven fabric, and a polypropylene nonwoven fabric. Preferably, the polymer backbone in the present application is a nonwoven fabric prepared by an electrostatic spinning process, which makes it easier for the polymer backbone to achieve the preset the diameters of the cross sections of the channels in the aforementioned embodiments, and also easier to control the volume percentage of the interconnecting channels in the polymer backbone. Moreover, the three materials of polyethylene terephthalate, polyimide and polypropylene are also suitable for the technical solution of the present application.

In some embodiments, the polymer backbone is selected from a polyethylene terephthalate porous film, a polyimide porous film, and a polypropylene porous film. Preferably, the polymer backbone in the present application is a nonwoven fabric prepared by an electrostatic spinning process, which makes it easier for the polymer backbone to achieve the preset diameters of the cross sections of the channels in the aforementioned embodiments, and also easier to control the volume percentage of the interconnecting channels in the polymer backbone. Moreover, the three materials of polyethylene terephthalate, polyimide and polypropylene are also suitable for the technical solution of the present application.

In some embodiments, the parameters of the electrostatic spinning include one or more of the following parameters: a voltage of 20 kV, a speed of 2 µL/min, and a receiving distance of 20 cm.

In some embodiments, a puncture strength of the polymer backbone is greater than or equal to 100 gf.

In some embodiments, a transverse tensile strength of the polymer backbone is 150 Mpa and/or a longitudinal tensile strength of the polymer backbone is 150 Mpa.

In some embodiments, a transverse elongation the polymer backbone is greater than or equal to 20%, and/or a longitudinal elongation of the polymer backbone is greater than or equal to 20%.

The puncture strength, the transverse and longitudinal tensile strength and the transverse and longitudinal elongation of the polymer backbone are also selected and determined based on various parameters in the technical solution, so as to maximize the strength and flexibility of the composite current collector.

In some embodiments, the two metal layers and the metal three-dimensional network structure are made of copper or aluminum.

In some embodiments, a thickness of the composite current collector is in a range of 3 µm to 30 µm. The thickness of the composite current collector may be, for example, in a range of 6 µm to 24 µm, and may also be, for example, 5 µm, 10 µm, 15 µm, 20 µm, or 25 µm.

In some embodiments, a thickness of the substrate layer is in a range of 1 µm to 25 µm. For example, the thickness of the substrate layer may be in a range of 4 µm to 20 µm, and may also be 5 µm, 10 µm, or 15 µm. The thickness of the substrate layer is in a preset range, which is able to be matched with the range of the diameters of the cross sections of the channels and the volume percentage of the channels, thereby further improving the performance of the composite current collector.

In some embodiments, the thicknesses of the two metal layers are each independently selected from a range of 0.3 µm to 3 µm. For example, the thicknesses of the two metal layers may be each independently selected from a range of 0.5 µm to 2.5 µm, and may also be each independently selected from 0.4 µm, 0.6 µm, 0.8 µm, 1.0 µm, 1.2 µm, 1.4 µm, 1.6 µm, 1.8 µm, 2.0 µm, 2.4 µm, 2.6 µm, or 2.8 µm. The thicknesses of the two metal layers are in the preset range, allowing the two metal layers to be combined with the metal three-dimensional network structure to form an integrated unit, further avoiding separation between the substrate layer and the metal layers
In some embodiments, a surface roughness Rz of the composite current collector is less than or equal to 5.0µm.

In some embodiments, the sheet resistances of the upper and lower surfaces of the composite current collector are less than or equal to 25 mΩ.

In another aspect of the present application, provided is further a preparation method of the aforementioned composite current collector, including the following steps.

Provided is the aforementioned polymer backbone including the interconnecting channels, metal filler is filled into the interconnecting channels of the polymer backbone by a vacuum coating method to prepare a substrate layer, and the two metal layers are formed the two sides of the substrate layer.

The vacuum coating method is vacuum evaporation or magnetron sputtering.

By adopting the vacuum coating method, especially the vacuum evaporation method, the metal material is able to be uniformly filled in the interconnecting channels of the substrate layers, and the preparation method is simple and easy for industrial production.

In some embodiments, the vacuum coating method is the vacuum evaporation, and the process parameters of vacuum evaporation include one or more of the following parameters: a vacuum degree of < 10⁻² Pa, an evaporation temperature in a range of 600 °C to 1600 °C, and an evaporation rate in a range of 10 m/min to 100 m/min.

When the selected metal is aluminum, the evaporation temperature is in a range of 600 °C to 900 °C; and when the selected metal is copper, the evaporation temperature is in a range of 1200 °C to 1600 °C. The appropriate evaporation temperature allows the metal to be smoothly and more uniformly filled in the channel, and allows the metal layer with a smaller roughness and a less sheet resistance to be formed.

For example, the evaporation rate may be 20 m/min, 30 m/min, 40 m/min, 50 m/min, 60 m/min, 70 m/min, 80 m/min, or 90 m/min. The appropriate evaporation rate results in the formed metal crystal with high density, small internal voids, and homogeneous product properties.

In some embodiments, after the metal layer is formed, included is further a step of winding the composite current collector, in which a winding tension is in a range of 5 N to 25 N. For example, the winding tension may be 10 N, 15 N, or 20 N. The appropriate winding tension is the final step to ensure the quality of the composite current collector, and is also limited based on the solutions of the application. The winding tension being too high is easily to cause the formed metal crystal to become loose, and even lead to a partial fracture between the metal three-dimensional network structures, resulting in an increase in the sheet resistance of the composite current collector and a decrease in the electrical conductivity. The winding tension being too low may lead to uneven thickness of the composite current collectors and a decrease in product consistency.

In some embodiments, an unwinding tension of the polymer backbone is in a range of 5 N to 30 N.

In another aspect of the present application, an electrode plate is further provided, including the composite current collectors in any of the aforementioned embodiments.

By adopting the aforementioned composite current collector having the three-dimensional network structure as the material of the electrode plate, a problem of poor flexibility of the metal current collector or the conventional composite current collectors is solved, thereby effectively preventing the plate from a fracture problem in the rolling process.

The present application further provides a battery including the aforementioned electrode plate.

By adopting the aforementioned electrode plate to prepare the battery, the finished product is flexible, has sufficient strength to pass the battery extrusion safety test and the heavy impact test for the battery successfully, and has good conductivity and small sheet resistance, which provides a broad application prospect.

The present application is described below in further detail in conjunction with specific examples and comparative examples. For the experimental parameters not specified in the following specific examples, reference may be preferred to the guidance given in the present application, and may also be made to the experimental manual in the art, or to other experimental methods known in the art, or to the experimental conditions recommended by the manufacturer. It is to be understood that the apparatus and raw materials used in the following examples are specific, and may not be limited thereto in other embodiments. The weights of the related components mentioned in a specification of the examples of the present application may not only refer to a specific content of each component, but also refer to a proportional relationship between the weights of the components. Therefore, as long as the contents of the related components are proportionately enlarged or reduced in accordance with the specification of the embodiments of the present application, they are within the scope disclosed in the specification of the examples of the present application. Specifically, the weights mentioned in the specification of the examples of the present application may be expressed in a mass unit known in the chemical industry such as µg, mg, g, and kg.

### Example 1

In step (1): the preparation of the polyethylene terephthalate nonwoven fabric with a thickness of 6 µm and interconnecting channels was as follows. 1 g of solid slice particles of polyethylene terephthalate (PET) were weighed, and dissolved in a mixed solvent of trifluoroacetic acid and dichloromethane (TFA:DCM = 4:1), and the mixed solution was left to defoam, so as to prepare a uniform transparent polyethylene terephthalate solution with a concentration of 25% after one hour of stirring at a constant speed on a thermostatic magnetic stirrer. The prepared polyethylene terephthalate solution was added into a syringe, and mounted on an electrostatic spinning apparatus, an extrusion speed of the spinning solution was 2.0 µl/min, a spinning voltage was set to 20 kV, a receiving distance was set to 20 cm, fibers were collected on an aluminum foil wrapped around the drum surface, and the polyethylene terephthalate nonwoven fabric was obtained by electrostatic spinning. The polyethylene terephthalate nonwoven fabric is tested by using a porometer gas permeation pore analyzer with an average diameter of cross sections of interconnecting channels being 300 nm. According to the volume percentage calculation formula: 1-mpolyethylene terephthalate nonwoven fabric layer ÷ρ_{polyethylene} terephthalate nonwoven fabric ÷V_{polyethylene} terephthalate nonwoven _{fabric layer}, the volume of the channels to that of the polyethylene terephthalate nonwoven fabric layer was calculated to be 45%.

In step (2), the polyethylene terephthalate nonwoven fabric in step (1) was unwound by using the unwinding tension of 8 N, 99.9% of aluminum ingot was put into the vacuum evaporation apparatus to coat the polyethylene terephthalate nonwoven fabric, the metal aluminum was allowed to be completely filled in the interconnecting channels of the nonwoven fabric to prepare a substrate layer with a volume percentage of 45% of aluminum, and an aluminum layer with a thickness of 1.5 µm was formed on each of the two sides of the substrate layer, so as to obtain a composite current collector having a metal three-dimensional structure. The specific process parameters of vacuum evaporation were: a vacuum degree of 6×10⁻³ Pa, an evaporation temperature of 680 °C, and an evaporation rate of 80 m/min.

In step (3), the composite collector prepared in step (2) was wound for storage by using the winding tension of 6 N.

### Example 2

It was substantially the same as Example 1, except that the metal used was 99.9% of copper and the evaporation temperature was 1300 °C.

### Example 3

It was substantially the same as Example 1, except that the average diameter of the cross sections of the interconnecting channels in the polyethylene terephthalate nonwoven fabric layer was 200 nm. The preparation method of the polyethylene terephthalate nonwoven fabric layer was as follows. 1 g of solid slice particles of polyethylene terephthalate (PET) were weighed, and dissolved in a mixed solvent of trifluoroacetic acid and dichloromethane (TFA:DCM = 4:1), and the mixed solution was set aside for defoaming after one hour of stirring at a constant speed on a thermostatic magnetic stirrer, so as to prepare a uniform transparent polyethylene terephthalate solution with a concentration of 22%. The prepared polyethylene terephthalate solution was added into a syringe, and mounted on an electrostatic spinning apparatus, an extrusion speed of the spinning solution was 1.8 µl/min, a spinning voltage was set to 23 kV, a receiving distance was set to 20 cm, fibers were collected on an aluminum foil wrapped around the drum surface, and the polyethylene terephthalate nonwoven fabric was obtained by electrostatic spinning.

### Example 4

It was substantially the same as Example 1, except that the average diameter of the cross sections of the interconnecting channels in the polyethylene terephthalate nonwoven fabric layer was 500 nm. The preparation method of the polyethylene terephthalate nonwoven fabric layer was as follows. 1 g of solid slice particles of polyethylene terephthalate (PET) were weighed, and dissolved in a mixed solvent of trifluoroacetic acid and dichloromethane (TFA:DCM = 4:1), and the mixed solution was set aside for defoaming after one hour of stirring at a constant speed on a thermostatic magnetic stirrer, so as to prepare a uniform transparent polyethylene terephthalate solution with a concentration of 25%. The prepared polyethylene terephthalate solution was added into the syringe, and mounted on the electrostatic spinning apparatus, the extrusion speed of the spinning solution was set to 2.4 µl/min, the spinning voltage was set to 16 kV, the receiving distance was set to 15 cm, the fibers were collected on the aluminum foil wrapped around the drum surface, and the polyethylene terephthalate nonwoven fabric was obtained by electrostatic spinning.

### Example 5

It was substantially the same as Example 1, except that the volume percentage of the interconnecting channels in the polyethylene terephthalate nonwoven fabric layer was 30%.

### Example 6

It was substantially the same as Example 1, except that the volume percentage of the interconnecting channels in the polyethylene terephthalate nonwoven fabric layer was 60%.

### Example 7

It was substantially the same as Example 1, except that the polyethylene terephthalate nonwoven fabric was replaced with a polyimide nonwoven fabric and the evaporation rate was 10 m/min.

### Comparative Example 1

It was substantially the same as Example 1, except that the average diameter of the cross sections of the interconnecting channels in the polyethylene terephthalate nonwoven fabric layer was 100 nm. The preparation method of the polyethylene terephthalate nonwoven fabric layer was as follows. 1 g of solid slice particles of polyethylene terephthalate (PET) were weighed, and dissolved in a mixed solvent of trifluoroacetic acid and dichloromethane (TFA:DCM = 4:1), and the mixed solution was set aside for defoaming after one hour of stirring at a constant speed on a thermostatic magnetic stirrer, so as to prepare a uniform transparent polyethylene terephthalate solution with a concentration of 20%. The prepared polyethylene terephthalate solution was added into a syringe, and mounted on an electrostatic spinning apparatus, an extrusion speed of the spinning solution was 1.8 µl/min, a spinning voltage was set to 28 kV, a receiving distance was set to 22 cm, fibers were collected on an aluminum foil wrapped around the drum surface, and the polyethylene terephthalate nonwoven fabric was obtained by electrostatic spinning.

### Comparative Example 2

It was substantially the same as Example 1, except that the average diameter of the cross sections of the interconnecting channels in the polyethylene terephthalate nonwoven fabric layer was 600 nm. The preparation method of the polyethylene terephthalate nonwoven fabric layer was as follows. 1 g of solid slice particles of polyethylene terephthalate (PET) were weighed, and dissolved in a mixed solvent of trifluoroacetic acid and dichloromethane (TFA:DCM = 4:1), and the mixed solution was set aside for defoaming after one hour of stirring at a constant speed on a thermostatic magnetic stirrer, so as to prepare a uniform transparent polyethylene terephthalate solution with a concentration of 25%. The prepared polyethylene terephthalate solution was added into a syringe, and mounted on an electrostatic spinning apparatus, an extrusion speed of the spinning solution was 2.6 µl/min, a spinning voltage was set to 14 kV, a receiving distance was set to 13 cm, fibers were collected on an aluminum foil wrapped around the drum surface, and the polyethylene terephthalate nonwoven fabric was obtained by electrostatic spinning.

### Comparative Example 3

It was substantially the same as Example 1, except that the volume percentage of the interconnecting channels in the polyethylene terephthalate nonwoven fabric layer was 20%.

### Comparative Example 4

It was substantially the same as Example 1, except that the volume percentage of the interconnecting channels in the polyethylene terephthalate nonwoven fabric layer was 70%.

### Comparative Example 5

It was substantially the same as Example 1, except that the evaporation rate was 150 m/min.

### Comparative Example 6

It was substantially the same as Example 1, except that the winding tension is 30N.

### Comparative Example 7

It was substantially the same as Example 1, except that the channels in the polyethylene terephthalate nonwoven fabric layer were not in communication with each other, and the average diameter of cross sections of the channels and the volume percentage of the channels in the nonwoven fabric remained the same.

### Comparative Example 8

It was substantially the same as Example 1, except that a solid polyethylene terephthalate film was used as the substrate layer, that is, a conventional composite current collector was prepared in the present contrast example.

### Comparative Example 9

In the present contrast example, a conventional pure aluminum current collector with a thickness of 9 µm was prepared as follows:
In step (1), An electrolytic aluminum melt was sent to a smelting furnace, an aluminum ingot accounting for 30% of the total weight of the electrolytic aluminum melt was added, a melt temperature was controlled to be 770 °C, and a mass percentage of each element component in the melt was adjusted as follows: 0.15% of Si, 0.48% of Fe, 0.13% of Cu, 1.3% of Mn, 0.03% of Ti, and the balance of Al. A refining agent was sprayed into the melt for refining by using pure nitrogen or pure argon, the melt was stirred well to homogenize, the refining time is of 9 minutes, then the melt was set aside for 20 minutes, the scum on the surface of the aluminum melt was removed, the aluminum melt was pour into the standing furnace, and the temperature in the standing furnace was controlled to be 755 °C. The aluminum melt in the standing furnace was sent into a flow tank, an aluminum titanium boron wire was added in a reverse direction for grain refining, then the aluminum melt was degassed with pure nitrogen or pure argon in the degassing box, and after degassed, the aluminum melt was filtered and purified with a foam ceramic filter. The purified aluminum melt was sent to a casting mill for casting and rolling, and a blank with a thickness of 4.0 mm was cast and rolled.
In step (2), after a raw material was refined, cast and rolled, a blank with a thickness of 4.0 mm was obtained.
In step (3), the blank obtained in step a was cold-rolled to a thickness of 4.0 mm and then subjected to homogenized annealing with a temperature of 470 °C and an annealing time of 25 hours.
In step (4), the homogenized annealed blank was cold-rolled to a thickness of 0.5 mm and then subjected to recrystallization annealing with a temperature of 300 °C and an annealing time of 15 hours.
In step (5), the recrystallized annealed blank was rolled to an aluminum foil of 9 µm.

### Comparative Example 10

In the contrast example, an aluminum composite current collector with a thickness of 9 µm was prepared as follows:
In step (1), a polyethylene terephthalate film with a thickness of 6 µm was selected, and a porous polyethylene terephthalate film with the diameters of the cross sections of channels cross sectional diameters of 300 nm and no interconnection between channels was prepared by laser perforation. According to the volume percentage calculation formula: 1-m_{polyethylene terephthalate} nonwoven fabric layer ÷ρ_{polyethylene} terephthalate nonwoven fabric ÷V_{polyethylene} terephthalate nonwoven fabric layer, the volume of the channels to that of the polyethylene terephthalate nonwoven fabric layer was calculated to be 45%.
In step (2), the porous polyethylene terephthalate film in step (1) was unwound by using the unwinding tension of 8 N, 99.9% of aluminum ingot was put into the vacuum evaporation apparatus to coat the polyethylene terephthalate nonwoven fabric, the metal aluminum was allowed to be completely filled in the interconnecting channels of the nonwoven fabric to prepare a substrate layer with a volume percentage of 45% of aluminum, and an aluminum layer with a thickness of 1.5 µm was formed on each of the two sides of the substrate layer, so as to obtain a composite current collector having a metal three-dimensional structure. The specific process parameters of vacuum evaporation were: a vacuum degree of 6×10⁻³ Pa, an evaporation temperature of 680 °C, and an evaporation rate of 80 m/min.
In step (3), the composite collector prepared in step (2) was wound for storage by using the winding tension of 6 N.

### Performance Characterization and Test:

The composite current collectors prepared in each of the examples and the comparative examples were respectively subjected to basic characterization and the following tests. The structure of the 100 Ah lithium battery used was as follows: the positive electrode was a NCM 811 ternary material, the negative electrode was graphite, the electrolyte was a lithium salt solution of lithium hexafluorophosphate in liquid form, separator was a wet PE separator, and the whole was an aluminum-plastic film casing pouch cell. The results obtained are listed in Table 1.
(1) Roughness test: a surface roughness of composite current collector is tested in accordance with the national standard GB/T 31227-2014.
(2) Tensile strength test: the tensile strength of the composite current collector is tested in accordance with the GB/T 36363-2018 standard.
(3) Elongation test: the composite current collector is tested in accordance with the test method of elongation at break in the GB/T 36363-2018 standard.
(4) Sheet resistance test: the prepared surface-modified polymer film on the sample stage is placed, and a four-probe sheet resistance meter is used to test the sheet resistance of the sample.
(5) Rolling test: the composite collector is rolled by using the rolling equipment, with a rolling time of 3 seconds, a rolling pressure of 60 tons, and no obvious crack on the metal layer of the collector surface.
(6) Peeling force test between metal layer and substrate layer: a layer of Permacel P-94 double-sided adhesive tape is bonded on a metal foil with a thickness of 1 mm, a composite current collector is bonded above the double-sided adhesive tape, and a layer of ethylene acrylic copolymer film (DuPont Nurcel0903, with a thickness of 50 µm), is covered on the composite current collector, then they were hot-pressed with a pressure of 1.3×105 N/m² and a temperature of 10°C for 10 seconds, cooled to room temperature, and cut into small strips of 150 mm×15 mm. Finally, the ethylene acrylic copolymer film of the sample strips is fixed to an upper fixture of the tensile machine, and the rest portion is fixed to a lower fixture. After fixed, the upper and lower fixtures are moved at an angle of 180 degrees at a speed of 100 mm/min to peel the substrate layer from the metal layers, and the peeling force between the metal layer and the substrate layer is able to be obtained by testing the tensile force applied when peeling the substrate layer and the metal layer.
(7) Battery extrusion test (100Ah lithium battery): the squeeze test on the battery is performed in accordance with the GB/T 31467.3-2015 standard.
(8) Battery heavy impact test (100Ah lithium battery): the heavy impact test is performed on the battery in accordance with GB 31241-2014 standard.

**Table 1**

| Groups | Roughness / µm | Tensile strength / MpaMD/TD | Elongation /% MD/TD | Sheet resistance / mΩ Surface 1/Surface 2 | Whether the rolling test was passed | Peeling force / N/m | Whether the extrusion test was passed | Whether the heavy impact test was passed |
|---|---|---|---|---|---|---|---|---|
| Example 1 | 0.5 | 55/42 | 50/40 | 20/20 | Yes | 10 | Yes | Yes |
| Example 2 | 0.48 | 56/45 | 45/36 | 19/18 | Yes | 11 | Yes | Yes |
| Example 3 | 0.5 | 53/40 | 53/42 | 23/22 | Yes | 8 | Yes | Yes |
| Example 4 | 0.5 | 57/45 | 46/35 | 17/16 | Yes | 11 | Yes | Yes |
| Example 5 | 0.49 | 52/44 | 54/43 | 22/22 | Yes | 8 | Yes | Yes |
| Example 6 | 0.5 | 56/47 | 48/39 | 15/16 | Yes | 13 | Yes | Yes |
| Example 7 | 0.45 | 57/46 | 47/36 | 19/20 | Yes | 12 | Yes | Yes |
| Comparative Example 1 | 0.5 | 45/28 | 55/47 | 28/32 | No | 5 | No | Yes |
| Comparative Example 2 | 0.5 | 60/48 | 35/25 | 13/12 | Yes | 15 | Yes | No |
| Comparative Example 3 | 0.51 | 42/34 | 58/46 | 26/27 | No | 6 | No | Yes |
| Comparative Example 4 | 0.5 | 58/49 | 42/34 | 13/13 | Yes | / | Yes | No |
| Comparative Example 5 | 0.6 | 48/36 | 40/29 | 25/23 | No | 8 | No | No |
| Comparative Example 6 | 0.55 | 52/41 | 45/32 | 21/22 | Yes | 9 | Yes | No |
| Comparative Example 7 | 0.5 | 53/42 | 49/40 | 29/30 | Yes | 9 | Yes | Yes |
| Comparative Example 8 | 0.5 | 50/40 | 48/39 | 32/31 | Yes | 2 | Yes | Yes |
| Comparative Example 9 | 0.1 | 62/51 | 7/5 | 13/12 | Yes | | Yes | No |
| Comparative Example 10 | 0.36 | 46/37 | 44/35 | 28/29 | Yes | 9 | Yes | Yes |

As shown in Table 1, the composite current collector prepared in each of the examples of the present application had good tensile strength and elongation, the surface roughness was less than or equal to 0.5 µm, the collector had a small sheet resistance on two surfaces thereof, the metal layers had a high peeling force from the substrate layer and were not easily delaminated, and the collector could pass the rolling test, the extrusion test and the heavy impact test.

Compared with Example 1, in Comparative Example 1, the channel cross sectional diameter was too small, resulting in narrow current channels, a decrease in the electrical conductivity of the current collector, an increase in the sheet resistance. Although the flexibility was improved to a certain extent, the strength was obviously decreased, and the rolling test and the extrusion test could not be passed. In Comparative Example 2, the diameters of the cross sections of the channels were too large, so that the flexibility was obviously decreased and the heavy impact test could not be passed. In Comparative Example 3, the channel volume percentage was too low, resulting in relatively few current pathways, and few metal filler, which would also have similar negative effects in Comparative Example 1. In Comparative Example 4, the channel volume percentage was too high, although the conductivity and the strength was improved, the flexibility was obviously reduced and the heavy impact test was not passed; and in the peeling force test of metal layers and the substrate layer, due to the good integrality of the collector, the metal layers could not be separated from the substrate layer without destroying the metal layers, and therefore it was impossible to test the peeling force. In Comparative Example 5, the evaporation rate was too high, which may lead to the metal crystals having insufficient compactness and large internal gaps, and to be relatively loose, and therefore, the obtained current collector had a significant decrease in the mechanical strength, the ductility and the conductivity, failing to pass the tests of these three, and the roughness of the finished product may also be affected. In Comparative Example 6, the winding tension was excessively large, which may lead to compactness problems of the metal crystal to a certain extent, similar to that in Comparative Example 5, resulting in a decrease in some properties. In Comparative Example 7, since the channels were not in communication with each other, the strength and toughness may be affected to a certain extent, and most importantly, the conductivity of the current collector may be affected significantly, resulting in a large sheet resistance. In Comparative Example 8, the conventional composite current collector was used. Compared with Example 1, the strength and toughness may be affected to a certain extent, the conductivity and unity were significantly affected, the sheet resistance was larger than that in Example 1, the separation between the metal layer and the matrix layer was more likely to occur. In Comparative Example 9, the conventional metal current collector was used, which had good strength and good conductivity, but had a greater difference in ductility than the composite current collector, and had a low energy density. Compared with Example 1, since the channels in Comparative Example 10 were not in communication with each other, the strength and the toughness were affected to a certain extent, and the conductivity of the current collector was also affected, resulting in a large sheet resistance.

The technical features of the above-described embodiments may be arbitrarily combined. For the sake of brevity, described are not all possible combinations of the technical features in the above-described embodiments. However, the scope of the present specification shall be considered as long as there is no contradiction between the combinations of these technical features.

The above-described embodiments are merely illustrative of several embodiments of the present application, and the description thereof is relatively specific and detailed, but is not to be construed as limiting the scope of the application. It should be noted that for those skilled in the art, a plurality of variations and improvements may be made without departing from the conception of the present invention, which also fall within the scope of protection of the present invention. Therefore, the scope of the application should be determined by the appended claims.

## Claims

1. A composite current collector having a metal three-dimensional network structure, comprising: a substrate layer and two metal layers respectively arranged on two sides of the substrate layer, wherein the substrate layer comprises a polymer backbone and a filling region, the filling region comprises a plurality of interconnecting channels and a metal filler filled in the plurality of the interconnecting channels, wherein the metal filler partly or completely fills the interconnecting channels to form a continuous metal three-dimensional network structure, and the metal three-dimensional network structure is in contact with the two metal layers, and
wherein an average diameter of the cross sections of the interconnecting channels is in a range of 200 nm to 500 nm.

2. The composite current collector according to claim 1, wherein the interconnecting channels constitute 30% to 60% volume of the substrate layer; and/or
the metal filler constitutes 30% to 60% volume of the substrate layer.

3. The composite current collector according to claim 1, wherein the polymer backbone is selected from a polyethylene terephthalate porous film, a polyimide porous film, and a polypropylene porous film.

4. The composite current collector according to claim 3, wherein the polymer backbone is provided with one or more features selected from:
puncture strength ≥ 100 gf;
transverse tensile strength ≥ 150 Mpa;
longitudinal tensile strength ≥ 150 Mpa;
transverse elongation ≥ 20%; and
longitudinal elongation ≥ 20%.

5. The composite current collector according to any one of claims 1 to 4, wherein the metal materials in the two metal layers and the metal three-dimensional network structure are each independently selected from copper and aluminum.

6. The composite current collector according to any one of claims 1 to 4, wherein the composite current collector is provided with one or more features selected from:
a thickness of the composite current collector is in a range of 3 µm to 30 µm;
a thickness of the substrate layer is in a range of 1 µm to 25 µm; and
thicknesses of the two metal layers are each independently selected from a range of 0.3 µm to 3 µm.

7. A preparation method of a composite current collector according to any one of claims 1 to 6, comprising:
providing the polymer backbone having the interconnecting channels, filling the metal filler into the interconnecting channels of the polymer backbone by a vacuum coating method to prepare a substrate layer, and forming the two metal layers on the two sides of the substrate layer,
wherein, the vacuum coating method is vacuum evaporation or magnetron sputtering.

8. The preparation method according to claim 7, wherein the vacuum coating method is vacuum evaporation, and process parameters comprise one or more selected from:
vacuum degree < 10⁻² Pa,
evaporation temperature in a range of 600 °C to 1600 °C, and
evaporation rate in a range of 10 m/min to 100 m/min,
wherein the preparation method further comprises a step of winding the composite current collector after the forming the metal layers, and the winding tension is in a range of 5 N to 25 N.

9. An electrode plate, comprising the composite current collector according to any one of claims 1 to 6.

10. A battery, comprising the electrode plate according to claim 9.
